# EUROPEAN PATENT APPLICATION

(11) **EP 3 832 914 A1**
(43) Date of publication of application: **09.06.2021**
(21) Application number: 19840985.6
(22) Date of filing: 22.05.2019
(51) Int. Cl.: H04J 14/02

(54) **OAM MESSAGE TRANSMISSION METHOD, SENDING DEVICE, RECEIVING DEVICE, AND READABLE STORAGE DEVICE**

(30) Priority: 27.07.2018 CN 201810848249
(71) Applicant: ZTE Corporation, shenzhen Guangdong 518057 (CN)
(72) Inventor: MA, Huannan, Shenzhen, Guangdong 518057 (CN); YANG, Bo, Shenzhen, Guangdong 518057 (CN); XU, Guoyang, Shenzhen, Guangdong 518057 (CN); LI, Yufeng, Shenzhen, Guangdong 518057 (CN); YUAN, Liquan, Shenzhen, Guangdong 518057 (CN); JIANG, Guangwei, Shenzhen, Guangdong 518057 (CN); CHEN, Xiangrong, Shenzhen, Guangdong 518057 (CN); TIAN, Hongliang, Shenzhen, Guangdong 518057 (CN)
(74) Representative: Deambrogi, Edgardo
(86) International application number: PCT/CN2019/088026
(87) International publication number: WO 2020/019845

(57) **Abstract**

Provided are an Operation Administration and Maintenance (OAM) message transmission method, a sending device, a receiving device and a readable storage medium. The method includes: first code block information of a code block occupied in service data by an OAM message fragment to be sent is determined; the OAM message fragment is added into the service data according to the first code block information; and the service data carrying the OAM message fragment is sent to the receiving device.

## Description

### Cross-Reference to Related Applications

The present invention is based upon and claims priority to Chinese patent application No. 201810848249.6, filed on July 27, 2018, the disclosure of which is hereby incorporated by reference in its entirety.

### Technical Field

The present invention relates to, but is not limited to, the technical field of communications.

### Background

A Wavelength Division Multiplexing Passive Optical Network (WDM-PON) formed by point-to-multipoint combination of WDM and PON has large bandwidth capacity, its delay is greatly reduced compared with a Time Division Multiplexing Passive Optical Network (TDM PON), and Optical Network Units (ONU) are isolated from each other with high security, so the WDM-PON has broad application prospects in radio bearer or private network user. The WDM-PON is composed of an Optical Line Terminal (OLT), an Optical Distribution Network (ODN) and an ONU. In addition to transmitting the service between an OLT interface and an ONU user interface, the WDM-PON also needs to support remote management of the ONU through the OLT. In order to support the remote management of the ONU, a channel and method for transmitting an Operation Administration and Maintenance (OAM) message between the OLT and the ONU need to be provided.

In the existing TDM PON system, the remote management usually has two transmission modes: Ethernet OAM message and ONU Management and Control Interface (OMCI) message. An Ethernet Passive Optical Network (EPON) adopts a mixed transmission mode of Ethernet OAM message and service message, which causes delay and jitter of the service message when the Ethernet packet is inserted. A Gigabit-Capable PON (GPON) adopts a complex GPON Transmission Convergence (GTC) frame structure to encapsulate OAM Information (OMCI). This processing method will also cause the change of spacing between adjacent packets in a service flow, resulting in the delay and jitter of the service message. An Auxiliary Management and Control Channel (AMCC) is configured as WDM-PON remote management transmission. Here, the AMCC has modes: transparent mode and transcoding mode. The transparent AMCC transmits low speed management information and high speed service signal by modulating them together through an optical module. This method will lead to the complexity of realizing the optical module and reduce an optical power budget of the optical module to the service signal. The transcoding AMCC has some redundant overhead for both 8B10B line coding and 64B66B line coding. Compression of these redundant bits through transcoding processing may be used for Forward Error Correction (FEC) overhead and for transmitting the OAM message. However, the transcoding mode depends on a coding mode of the service itself, especially is bound with the use of FEC function in the application, so there are some limitations. Moreover, the FEC also introduces a certain delay, and an unnecessary delay is introduced by binding the management message and the FEC with the application.

A 5G pre-transmission application needs to provide transmission channels with high bandwidth (such as 25Gbps), and a high challenge is presented to a high-speed optical transceiver modules to meet the optical power budget of a 5G pre-transmission network. On the other hand, the 5G pre-transmission network requires low delay and small jitter, so the OAM information transmission mechanism in the related art is not applicable to the WDM-PON system of 5G pre-transmission.

### Summary

The embodiments of the present invention provide a method for transmitting an OAM message, a sending device, a receiving device and a readable storage medium.

The technical solutions of the embodiments of the present invention are implemented as follows.

In a first aspect, the embodiments of the present invention provide a method for transmitting an OAM message, which includes: first code block information of a code block occupied in service data by an OAM message fragment to be sent is determined; the OAM message fragment is added into the service data according to the first code block information; and the service data carrying the OAM message fragment is sent to a receiving device.

In a second aspect, the embodiments of the present invention provide another method for transmitting an OAM message, which includes: service data sent by a sending device is received; if the service data includes the OAM message fragment of an OAM message, the OAM message fragment is obtained; and according to the OAM message fragment, framing is performed to a first fragment unit included in the OAM message fragment to obtain the OAM message.

In a third aspect, the embodiments of the present invention provide a sending device, which at least includes: a memory, a communication bus and a processor. The memory is configured to store a computer program, the communication bus is configured to realize a communication connection between the processor and the memory, and the processor is configured to execute the computer program stored in the memory, so as to implement the steps of the method for transmitting an OAM message provided by the embodiments of the present invention.

In a fourth aspect, the embodiments of the present invention provide a receiving device, which at least includes: a memory, a communication bus and a processor. The memory is configured to store a computer program, the communication bus is configured to realize a communication connection between the processor and the memory, and the processor is configured to execute the computer program stored in the memory, so as to implement the steps of the method for transmitting an OAM message provided by the embodiments of the present invention.

In a fifth aspect, the embodiments of the present invention provide a readable storage medium, which stores a computer-executable instruction. The computer-executable instruction is configured to perform the steps of the method for transmitting an OAM message provided by the embodiments of the present invention.

The technical solutions provided by the embodiments of the present invention solve the problems in the related art of jitter of the service message caused and unnecessary delay introduced during multiplexing transmission of OAM message and service flow. By fragmenting the OAM message and transmitting the OAM message in an idle time slice of the service flow or a control block with a fixed value, not only the transmission of the service flow will not be affected, but also the delay and jitter can be eliminated or significantly reduced.

### Brief Description of the Drawings

Fig. 1 is a flowchart of a method for transmitting an OAM message according to an embodiment of the present invention.
Fig. 2 is a flowchart of a method for transmitting an OAM message according to an embodiment of the present invention.
Fig. 3 is a structure diagram of a device for transmitting an OAM message according to an embodiment of the present invention.
Fig. 4 is a schematic diagram of an implementation mode of an OAM message fragment multiplexed with a 25G Ethernet service according to an embodiment of the present invention.
Fig. 5 is a composition structure diagram of an OAM message fragmenting module according to an embodiment of the present invention.
Fig. 6 is a composition structure diagram of an OAM message framing module according to an embodiment of the present invention.
Fig. 7 is another composition structure diagram of an OAM message fragmenting module according to an embodiment of the present invention.
Fig. 8 is another composition structure diagram of an OAM message framing module according to an embodiment of the present invention.
Fig. 9 is a schematic diagram of hierarchical relationship between processing modules for performing OAM message multiplexing and demultiplexing at a Physical Coding Sublayer (PCS) of an IEEE802.3 standard Ethernet interface according to an embodiment of the present invention.
Fig. 10 is a schematic diagram of a process of multiplexing an OAM message at a PCS layer of a sending side according to an embodiment of the present invention.
Fig. 11 is a schematic diagram of a process of demultiplexing an OAM message at a PCS layer of a receiving side according to an embodiment of the present invention.
Fig. 12 is a schematic diagram of processing hierarchy of performing OAM message multiplexing and demultiplexing at a Reconciliation Sublayer (RS) layer of an IEEE802.3 standard Ethernet interface.
Fig. 13 is a schematic diagram of a process of multiplexing an OAM message at an RS layer of a sending side according to an embodiment of the present invention.
Fig. 14 is a schematic diagram of a process of demultiplexing an OAM message at an RS layer of a receiving side according to an embodiment of the present invention.
Fig. 15 is a schematic diagram of processing hierarchy of performing OAM message multiplexing and demultiplexing at an FEC layer of an IEEE802.3 standard Ethernet interface.
Fig. 16 is a schematic diagram of a process of multiplexing an OAM message at an FEC layer of a sending side according to an embodiment of the present invention.
Fig. 17 is a schematic diagram of a process of demultiplexing an OAM message at an FEC layer of a receiving side according to an embodiment of the present invention.
Fig. 18 is a composition structure diagram of a sending device according to an embodiment of the present invention.

### Detailed Description of the Embodiments

In order to make the purpose, technical solutions and advantages of the present invention clearer, the specific technical solutions of the invention will be further described in detail below in combination with the accompanying drawings in the present invention. The following embodiments are used to illustrate the present invention but not to limit the scope of the present invention.

### Embodiment one

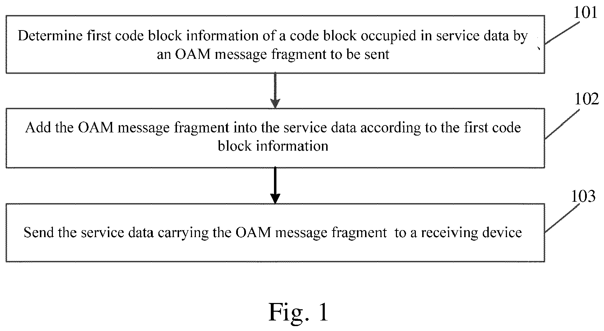

The present embodiment of the present invention provides a method for transmitting an OAM message. Fig. 1 is an implementation flowchart of a method for transmitting an OAM message according to an embodiment of the present invention. As shown in Fig. 1, the method includes the following steps.

At step101, first code block information of a code block occupied in service data by an OAM message fragment to be sent is determined.

Here, step101 may be implemented by a sending device. The sending device may be either an OLT or an ONU.

The OAM message fragment to be sent may be obtained by coding fragment units and fragment head information of several OAM message contents according to a preset coding format, or by coding fragment units and OAM message identifier control characters of several OAM message contents according to the preset coding format. Of course, the OAM message fragment may also be obtained by coding the fragment units, the fragment head information and the OAM message identifier control characters of several OAM message contents according to the preset coding format.

In the embodiments of the present invention, the preset coding format may be the same as or different from the coding format of the service data that has not yet carried the OAM message fragment. For example, when the coding format of the service data that has not yet carried the OAM message fragment is 64B66B, the preset coding format may be 64B66B; when the coding format of the service data that has not yet carried the OAM message fragment is 8B10B, the preset coding format may be 64B66B. The preset coding format is the same as the coding format of the final sent service data carrying the OAM message fragment.

The first code block information may include the start position of the code block occupied by the OAM message fragment and the number of occupied code blocks.

The implementation process of step101 is related to a multiplexing layer of an OAM message and the service data. For example, if the multiplexing layer of the OAM message and the service data is a PCS layer, then when the first code block information is determined, it is needed to first determine, from the service data, second code block information of a control block that has been used and whose content is a fixed value, and then determine the first code block information according to the bandwidth required by transmitting the OAM message.

If the multiplexing layer of the OAM message and the service data is an Reconciliation Sublayer (RS), then the OAM message may be transmitted using an idle byte space between adjacent Ethernet packets; in this case, it is needed to first obtain the size of the idle byte space between adjacent Ethernet packets, and then determine the first code block information according to the size of the idle byte space.

If the multiplexing layer of the OAM message and the service data is an FEC layer, then when the first code block information is determined, it is needed to firstly determine the third code block information of a codeword marker code block in the service data, and then select a part of code blocks from the codeword marker code blocks according to the third code block information to transmit the OAM message fragment.

At step102, the OAM message fragment is added into the service data according to the first code block information.

Here, step102 may be implemented by the sending device. Corresponding to S101, the implementation process of S102 is also related to the multiplexing layer of the OAM message and the service data. For example, if the multiplexing layer of the OAM message and the service data is the PCS layer, then when the OAM message fragment is added into the service data, the data corresponding to the first code block information is replaced with the OAM message fragment; if the multiplexing layer of the OAM message and the service data is the RS layer, because the first code block information corresponds to the idle byte space, then when the OAM message fragment is added into the service data, the OAM message fragment is added into the service data as the first code block information, or it may be considered that the OAM message fragment is added into the service data.

At step103, the service data carrying the OAM message fragment is sent to a receiving device.

Here, step103 may be implemented by the sending device. When step103 is implemented, the sending device may send the service data carrying the OAM message fragment to the receiving device through the WDM-PON.

In the method for transmitting an OAM message provided by the embodiments of the present invention, first the first code block information of the code block occupied in the service data by the OAM message fragment to be sent is determined; next the OAM message fragment is added into the service data according to the first code block information; then the service data carrying the OAM message fragment is sent to the receiving device. In this way, by fragmenting the OAM message and then multiplexing the OAM message fragment for transmission in the service flow, not only the transmission of the service flow will not be affected, but also the delay and jitter can be eliminated or significantly reduced.

### Embodiment two

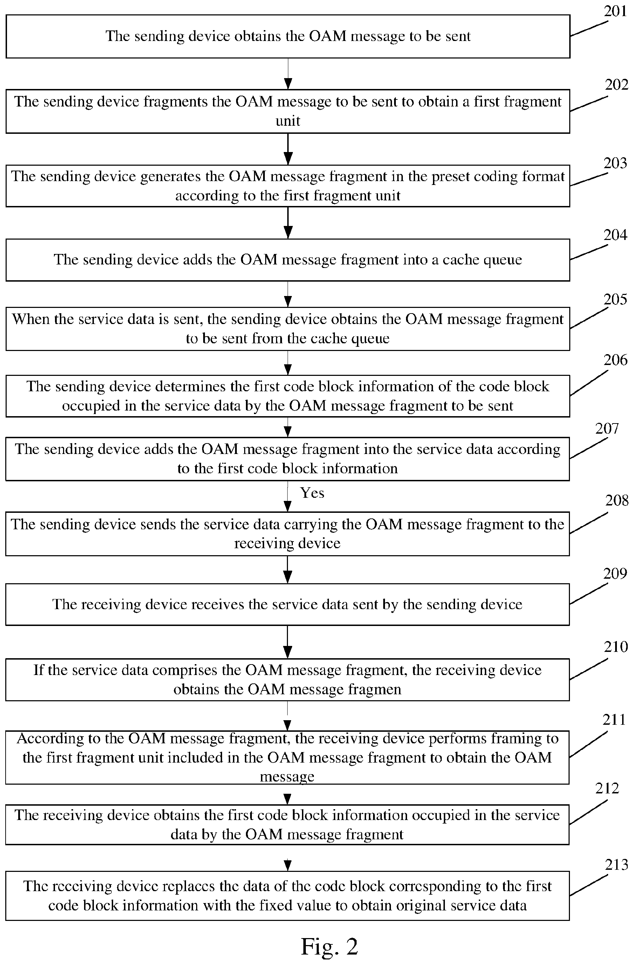

Based on the above embodiments, the present embodiment of the present invention provides another OAM message transmission method. Fig. 2 is an implementation flowchart of a method for transmitting an OAM message according to an embodiment of the present invention. As shown in Fig. 2, the method includes the following steps.

At step201, the sending device obtains the OAM message to be sent.

Here, the sending device may be either the OLT or the ONU. The OLT and the ONU need to transmit the OAM message to realize remote management of the ONU by the OLT.

In the present embodiment, the OAM message to be sent may be either OAM message frame data or OAM message bit stream data.

At step202, the sending device fragments the OAM message to be sent to obtain a first fragment unit.

Here, after obtaining the OAM message to be sent, the sending device fragments the OAM message. In the implementation process, the OAM message may be fragmented into a 8bit first fragment unit; of course, the OAM message may also be fragmented into a 16bit first fragment unit.

In the present embodiment, if the OAM message is fragmented at 8bit, then M first fragment units are obtained, M being a natural number greater than 1.

At step203, the sending device generates the OAM message fragment in the preset coding format according to the first fragment unit.

Here, the OAM message fragment includes at least a first fragment unit.

At step204, the sending device adds the OAM message fragment into a cache queue.

At step205, when the service data is sent, the sending device obtains the OAM message fragment to be sent from the cache queue.

Here, when the service data is sent, the sending device may first determine whether there is the OAM message to be sent in the cache queue; when there is the OAM message to be sent in the cache queue, the sending device obtains the OAM message fragment to be sent from the cache queue.

At step206, the sending device determines the first code block information of the code block occupied in the service data by the OAM message fragment to be sent.

Here, when the OAM message and the service data are multiplexed at different multiplexing hierarchies, the implementation process of S206 is different.

At step207, the sending device adds the OAM message fragment into the service data according to the first code block information.

Here, corresponding to step206, when the OAM message and the service data are multiplexed at different multiplexing hierarchies, the implementation process of step207 is also different.

When the multiplexing layer of the OAM message and the service data is the PCS layer or the FEC layer, during the implementation of step207, the service data corresponding to the first code block information is replaced with the OAM message fragment; when the multiplexing hierarchy of the OAM message and the service data is the RS layer, during the implementation of step207, the OAM message fragment is added into the service data as the data corresponding to the first code block information, that is, the OAM message fragment is inserted into the service data.

At step208, the sending device sends the service data carrying the OAM message fragment to the receiving device.

At step209, the receiving device receives the service data sent by the sending device.

Here, in another embodiment, after receiving the service data, the receiving device determines whether the service data includes the OAM message fragment. During implementation, the receiving device may determine whether the service data includes the OAM message identifier control character. When the service data includes the OAM message identifier control character, it is considered that the service data includes the OAM message fragment, and then step210 is entered. When the service data does not include the OAM message identifier control character, in other embodiments, it may be further determined whether an interface for receiving the service data is the interface for transmitting the service data including the OAM message fragment; if so, it is considered that the service data includes the OAM message fragment, and then step210 is entered; if the interface for receiving the service data is the interface for transmitting the service data not including the OAM message fragment, it is considered that the service data does not include the OAM message fragment, and then the flow is ended.

At step210, if the service data includes the OAM message fragment, the receiving device obtains the OAM message fragment.

Here, when step210 is implemented, the OAM message fragment corresponding to the OAM message identifier control character may be obtained according to the OAM message identifier control character.

At step211, according to the OAM message fragment, the receiving device performs framing to the first fragment unit included in the OAM message fragment to obtain the OAM message.

Here, step211 may be implemented by the following steps.

At step2111, the OAM message fragment is decoded according to a preset decoding manner to obtain a first decoding result.

Here, the first decoding result at least includes the first fragment unit. In other embodiments, the first decoding result may also include at least one of the fragment head information and the OAM message identifier control character, and the fragment head information at least includes an index identity of the first fragment unit.

At step2112, if the first decoding result includes the index identity of the first fragment unit, framing is performed to the first fragment unit according to the index identity to obtain the OAM message.

At step212, the receiving device obtains the first code block information occupied in the service data by the OAM message fragment.

Here, the receiving device may obtain the first code block information occupied in the service data by the OAM message fragment through the position of the OAM message identifier control character and the size of the OAM message fragment; then, the receiving device may determine through the first code block information whether the code block corresponding to the first code block information is the code block that has been used in the service data and whose content is the fixed value; if so, step213 is entered; if not, the flow is ended.

At step213, if the code block corresponding to the first code block information is the code block that has been used in the service data and whose content is the fixed value, the receiving device replaces the data of the code block corresponding to the first code block information with the fixed value to obtain original service data.

Here, by replacing the data of the code block corresponding to the first code block information with the fixed value, the service data before multiplexing is obtained. After the service data is scrambled, it is sent to a service interface through an FEC module or a serial-parallel conversion module. When the service data before multiplexing and the service data that has not yet carried the OAM message fragment have different coding formats, it is also needed to perform transcoding to the service data before scrambling.

It is to be noted that the interpretation of the same steps and concepts in the present embodiment as in other embodiments may refer to the descriptions in other embodiments.

In the method for transmitting an OAM message provided by the embodiments of the present invention, the sending device first fragments the OAM message to be sent according to a preset length to obtain the first fragment unit, and generates the OAM message fragment in the preset coding format according to the first fragment unit, and then adds the OAM message fragment into the cache queue. When the service data is sent, the sending device obtains the OAM message fragment to be sent from the cache queue, and adds the OAM message fragment into the service data to be sent to the receiving device. When the service data received by the receiving device includes the OAM message fragment, the receiving device obtains the OAM message fragment, and then performs framing to the first fragment unit included in the OAM message fragment according to the OAM message fragment to obtain the OAM message. The receiving device also obtains the first code block information occupied in the service data by the OAM message fragment. If the code block corresponding to the first code block information is the code block that has been used in the service data and whose content is the fixed value, the receiving device replaces the data of the code block corresponding to the first code block information with the fixed value to obtain the original service data. In this way, by fragmenting the OAM message and transmitting it in an idle time slice of the service flow or a control block with a fixed value, not only the transmission of the service flow will not be affected, but also the delay and jitter can be eliminated or significantly reduced.

In another embodiment, when the OAM message obtained by the sending device is frame structure data, OAM message bit stream data may also be obtained by the following steps, and the OAM message bit stream data is taken as the OAM message to be sent.

At step31, the sending device performs PCS layer coding to the OAM message to be sent to obtain a first coding result.

At step32, the sending device performs FEC coding to the first coding result to obtain a second coding result.

At step33, the sending device performs parallel-serial conversion to the second coding result to obtain an OAM message bit stream to be sent.

Correspondingly, when framing is performed to the first fragment unit to obtain the OAM message which is bit stream data in step211, the original frame structure data may also be obtained by the following steps.

At step41, if the OAM message bit stream is obtained after framing is performed to the first fragment unit, parallel-serial conversion is performed to the OAM message bit stream to obtain a first processing result.

At step42, FEC decoding is performed to the first processing result to obtain a second decoding result.

At step43, PCS decoding is performed to the second decoding result to obtain the OAM message frame data.

In another embodiment, step203 may have at least the following three implementation modes.

The first implementation mode can be realized by the following steps.

At step2031a, the fragment head information is generated at least according to the index identity of the first fragment unit.

Here, in other embodiments, the fragment head information may also be generated according to the type of the OAM message and an index identity of the first fragment unit. It is to be noted that the fragment head information and OAM fragment field in other embodiments may be considered to be the same.

At step2032a, the fragment head information and the first preset number of first fragment units are coded according to the preset coding format to obtain the OAM message fragment.

When the OAM message and the service data are multiplexed at the RS layer, the OAM message fragment may be obtained by the first implementation mode. When the OAM message and the service data are multiplexed at the RS layer, the OAM message fragment and the service data not including the OAM message fragment are transmitted to the PCS layer through different interfaces, so when the OAM message fragment is generated in this case, the service data including the OAM message fragment and the service not including the OAM message fragment can be distinguished without adding the OAM message identifier control character into the OAM message fragment at the RS layer.

The second implementation mode can be realized by the following steps.

At step2031b, the OAM message identifier control character is determined according to the type of the service data, the coding format of the service data and a multiplexing protocol layer.

At step2032b, the OAM message identifier control character and the first preset number of first fragment units are coded according to the preset coding format to obtain the OAM message fragment.

Here, the OAM message identifier control character may be used to distinguish the OAM message fragment from the service data.

The third implementation mode can be realized by the following steps.

At step2031c, the fragment head information is generated at least according to the index identity of the first fragment unit.

At step2032c, the OAM message identifier control character is determined according to the type of the service data, the coding format of the service data and the multiplexing protocol layer.

At step2033c, the fragment head information, the OAM message identifier control character and the second preset number of first fragment units are coded according to the preset coding format to obtain the OAM message fragment.

In other embodiments, when the multiplexing layer of the OAM message and the service data is the PCS layer, step206 may be realized by the following steps.

At step2061a, the second code block information of at least one of the control block not used in the service data and the control block that has been used in the service data and whose content is the fixed value is obtained.

At step2602a, the first code block information of the code block occupied in the service data by the OAM message fragment is determined according to the second code block information and the bandwidth required by the OAM message.

Here, it is assumed that the second code block information obtained in step2061a is block type fields 0x1e and 0x33, when the bandwidth required by the OAM message is small, the OAM message may be transmitted by only using the byte space the block type field 0x1e. Of course, to transmit the OAM message more efficiently, the second code block information may also be directly determined as the first code block information, that is, all the byte spaces corresponding to the second code block information are used to transmit the OAM message.

When the multiplexing layer of the OAM message and the service data is the RS layer, step206 may be realized by the following steps.

At step2061b, the idle byte space between the adjacent packets in the service data is obtained.

At step2062b, the first code block information of the code block occupied in the service data by the OAM message fragment is determined according to the idle byte space.

When the multiplexing layer of the OAM message and the service data is the FEC layer, step206 may be realized by the following steps.

At step2061c, the third code block information of the codeword marker code block in the service data is determined.

At step2062c, the first code block information of the code block occupied in the service data by the OAM message fragment is determined according to the third code block information of the codeword marker code block and the bandwidth required by the OAM message.

Here, an RS-FEC(528, 514) algorithm is adopted for the 25G Ethernet. There is a codeword marker in the coding, and the code blocks in the received data flow may be synchronously locked through the codeword marker at the FEC layer. In the embodiment of step2061c to step2062c, the third code block information of the codeword marker code block in the service data may be first determined, that is, the codeword marker code block of 257 bits is found, next consecutive 64 bits required by synchronization may be removed from the third code block information to obtain the code block information that can be occupied by the OAM message fragment, and then the first code block information is determined according to the bandwidth required by the OAM message. For example, the codeword marker code block is 257 bits, and the bits from 0 to 63 are reserved for synchronous locking; then, a certain number of bits may be selected from 64 to 256 bits as the code block to be occupied by the OAM message. For example, when the bandwidth required by the OAM message is small, 64 bits may be selected from 64 to 256 bits as the code block occupied by the OAM message fragment. When the bandwidth required by the OAM message is large, 128 bits or 192 bits may be selected from 64 to 256 bits as the code block occupied by the OAM message fragment

In another embodiment, before step2112, the method further includes the following steps.

At step51, if the first decoding result includes the OAM message identifier control character, the OAM message identifier control character in the first decoding result is removed to obtain a second processing result.

At step52, if the second processing result includes the fragment head information, the index identity of the first fragment unit included in the fragment head information is obtained.

At step53, the fragment head information in the second processing result is removed to obtain the first fragment unit included in the first decoding result.

In other embodiments, when realized, step211 may include the following steps.

At step2113, if the first decoding result does not include the index identity of the first fragment unit, framing is performed to the first fragment unit according to a preset algorithm to obtain a first framing result.

At step2114, The first framing result is validated, and if the first framing result passes the verification, the first framing result is taken as the received OAM message.

Here, if the first framing result does not pass the verification, the first framing result is discarded, and a notification message about framing failure is sent to the sending device.

Based on the above embodiments, an embodiment of the present invention provides another OAM message transmission method, which is applied to the OAM message transmission device. The method does not depend on a transparent AMCC of an optical module, will not affect the transmission ability of service data, nor will cause the delay and jitter of service forwarding.

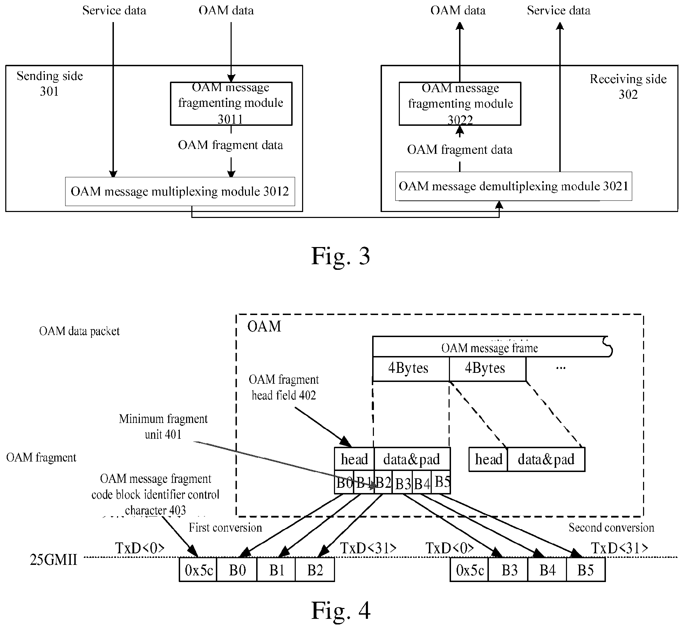

In the embodiments of the present invention, the OAM message transmission device includes a sending side device and a receiving side device. Fig. 3 is a composition structure diagram of the OAM message transmission device according to an embodiment of the present invention. As shown in Fig. 3, the sending side device 301 includes an OAM message fragmenting module 3011 and an OAM message multiplexing module 3012; and the receiving side device 302 includes an OAM message demultiplexing module 3021 and an OAM message framing module 3022.

When the method for transmitting an OAM message is implemented, the OAM message fragmenting module 3011 of the sending side device fragments the OAM message to be sent, the OAM message multiplexing module 3012 uses a message interval in the service flow to insert an OAM message fragment code, or replaces a special codeword in the service flow with the OAM message fragment code to send the OAM message. A code stream after multiplexing the OAM message is sent from the sending side device to the receiving side device. The OAM message multiplexing module 3012 of the receiving side device determines whether the OAM message is fragmented according to the control character. If the OAM message is fragmented, the content of the OAM message fragment is extracted. For the processing of replacing the special code, after the OAM message fragment is extracted, the original special code of the service flow is restored. At last, the OAM message framing module 3022 performs framing to the received OAM message fragment, thereby generating the complete OAM message.

It is to be noted that in practical inventions, the service flow is bidirectional, so is an OAM channel, so two network device nodes connected to each other have corresponding modules at the sending side and receiving side as shown in the figure above.

The WDM-PON ONU and the OLT provide an enhanced-Common Public Radio Interface (eCPRI) and CPRI service access, and support multiple Ethernets of 10G, 25G and the like and CPRI rate grades. A WDM-PON link is between the ONU and the OLT. The OAM message is multiplexed on the service channel between the ONU and the OLT to provide a remote management channel for the ONU.

The transmission process of the OAM message is divided into two parts, that is, OAM message fragmenting/framing and OAM message multiplexing/demultiplexing, for description.

Firstly, the part of OAM message fragmenting/framing is described.

In the embodiments of the present invention, the process of fragmenting/framing the OAM message frame structure and the process of fragmenting/framing the OAM message bit stream are described separately.

First, the process of fragmenting/framing the OAM message frame structure is described.

In the embodiments of the present invention, at the sending side, the process of fragmenting the OAM message frame structure includes the following steps.

At step61, taking 8bit (1byte) as the minimum fragment unit, an OAM message frame is fragmented into several minimum fragment units.

At step62, an OAM fragment head field is added based on message data according to the type and length of the OAM message. The OAM fragment head field may include, but is not limited to, a message type filed, a fragment start and end, a fragment coding field, etc.

At step63, an OAM message fragment code block identifier control character is defined according to the multiplexed service type, the coding format and the multiplexing protocol layer, and the OAM message fragment code block identifier control character, the OAM fragment head field and the fragment unit are combined into the OAM message fragment according to a service code block format.

Here, the OAM message fragment code block identifier control character is used to distinguish an OAM message fragment code block from a service message code bock.

At step64, the OAM message fragment is added into the cache queue in turn, waiting to be multiplexed with the service message.

According to the above process, Fig. 4 shows an implementation mode of an OAM message fragment multiplexed with a 25G Ethernet service.

For the OAM message of any length, its frame structure is fragmented with 8bit (1byte) as the minimum fragment unit 401. The OAM fragment head information 402 of 2byte is defined according to the type and length of the OAM message, for example, type, last flag and flag index domain defined in Table 1. Two bytes 0x55 and Oxff are defined according to the coding format 64B66B of the 25G Ethernet as the OAM message fragment code block ordered set control characters 403 for distinguishing the OAM message fragment code block from the service message code bock, and the OAM message fragment code block ordered set control characters of 2byte, the fragment head field of 2byte and the fragment unit of 4byte (Data&pad) are combined into the OAM message fragment and a 64bit (8byte) Block Payload (refer to the IEEE 802.3 standard for definition) field of the 64B66B code block according to a service coding block format.

**Table 1: Definition of an OAM message fragment**

| Field width/bit | Domain | Description |
|---|---|---|
| 7 | type | Message type: 1 is ploam message, 2 is baseline omci message, 3 is extended omci message, 4 is Ethernet OAM message |
| 1 | Last flag | Identify whether it is the last fragment of the OAM message |
| 8 | flag index | Code of the fragment in a message |
| 32 | Data&pad | Message content, filled with 0 when the message content is less than 4 bytes |

In the implementation process of the OAM message fragment, the OAM fragment head information (head field) is added based on the OAM message data. The OAM fragment head information includes a message type field, whether it is the last fragment identifier field, and a fragment number index field. In other embodiments, the OAM message fragment may include only the OAM message fragment unit and the OAM message fragment code block ordered set control character, and not the OAM fragment head information. That is, an OAM message fragment of 8byte may be composed of the OAM message fragment code block identifier control character of 2byte and 6 minimum fragment units the length of which is 6byte.

In the implementation process of the OAM message fragment, the OAM message fragment entering the cache queue includes the OAM message fragment code block identifier control character of 2byte, the fragment head information of 2byte and the fragment unit (Data&pad) of 4byte, and the data of 8byte is combined into the OAM message fragment according to the service code block format, and the OAM message fragment is multiplexed at the PCS layer or the FEC layer for the service data.

In another embodiment, when the OAM message fragment is multiplexed at the RS layer (for example, the OAM message fragment is inserted between the adjacent service messages), the OAM message fragment includes only the OAM message fragment unit and the OAM fragment head information, not the OAM message fragment code block identifier control character. When the OAM message fragment code block identifier control character is multiplexed at the RS layer, it is added at the PCS layer after being multiplexed by a 25G MII interface, and the added location is consistent with that in the implementation process of the OAM message fragment (locations of the 64B66B code blocks D0 and D4).

In the implementation process of the OAM message fragment, the OAM message fragment code block identifier control characters are 0x55 and Oxff, which are respectively located at the 64B66B code blocks D0 and D4), as a specific implementation mode. By adding a corresponding number of code block types based on the existing standard definition, or selecting a corresponding number of code block types and locations of the control blocks that are not used in the current service scenario are from the standard definition, the service data code block can be distinguished from the OAM message fragment, as alternative schemes. When the OAM message fragment is multiplexed with the 25G Ethernet service, the OAM message fragment code block identifier control character may also be 0x66 and 0xf7. When the OAM message fragment is multiplexed with the CPRI service, the OAM message fragment code block identifier control character may also be the above control character.

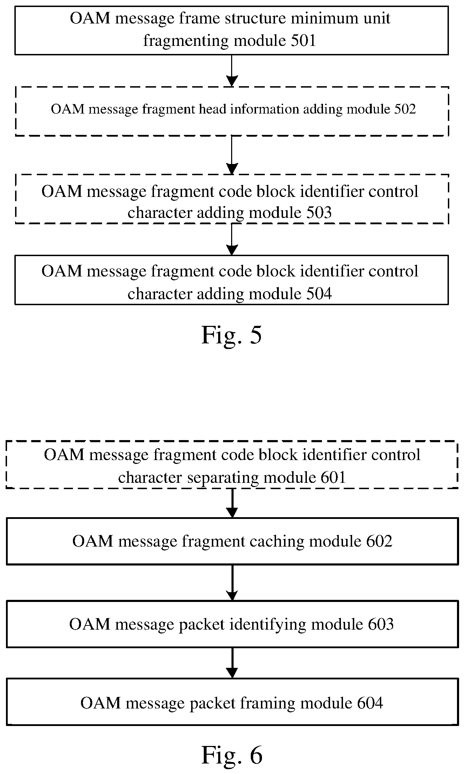

Correspondingly, Fig. 5 is a composition structure diagram of an OAM message fragmenting module according to an embodiment of the present invention. As shown in Fig. 5, the OAM message fragmenting module may include: an OAM message frame structure minimum unit fragmenting module 501, an OAM message fragment head information adding module 502, an OAM message fragment code block identifier control character adding module 503 and an OAM message fragment caching module 504.

The OAM message frame structure minimum unit fragmenting module 501 is configured to, taking 8bit (1byte) as the minimum fragment unit, fragment the OAM message frame into several minimum fragment units.

The OAM message fragment head information adding module 502 is configured to add the OAM fragment head information based on the message data according to the type and length of the OAM message. The OAM fragment head information includes the message type filed, the fragment start and end, the fragment coding field, etc.

The OAM message fragment code block identifier control character adding module 503 is configured to define the OAM message fragment code block identifier control character according to the multiplexed service type, the coding format and the multiplexing protocol layer for distinguishing the OAM message fragment code block from the service flow, and combine the OAM message fragment code block identifier control character, the fragment head information and the fragment unit into the OAM message fragment according to the service code block format.

The OAM message fragment caching module 504 is configured to cache the OAM message fragment.

It is to be noted that the OAM message fragment head information adding module 502 and the OAM message fragment code block identifier control character adding module 503 are optional modules, so the OAM message fragment head information adding module 502 and the OAM message fragment code block identifier control character adding module 503 are represented by a dashed box in Fig. 5.

In the embodiments of the present invention, at the receiving side, the process of framing the OAM message includes the following steps.

At step71, the OAM message fragment code block identifier control character is separated.

Here, during implementation of step71, the OAM message fragment code block identifier control character is removed from a first OAM message fragment code block stream which is obtained after demultiplexing with the service data to form a second OAM message fragment code block stream, and the second OAM message fragment code block stream is stored in the cache queue. The second OAM message fragment code block stream is composed of the OAM message fragment unit and the OAM fragment head information.

At step72, an OAM message packet is identified.

Here, the minimum OAM message fragment unit included in each OAM message packet frame structure is identified according to the OAM fragment head information in the second OAM message fragment code block stream.

At step73, the OAM fragment head information is separated and the OAM message packet is framed.

Here, during implementation of step73, first index information corresponding to each OAM message packet is obtained according to the OAM fragment head information of each OAM message packet, and then the OAM fragment head information is separated, that is, the OAM fragment head information in each OAM message packet is removed; after the OAM fragment head information is removed, the minimum OAM message fragment units of the OAM message packets are combined into a complete message packet frame structure according to the index information of each OAM message packet. That is, an OAM message stream is composed of multiple OAM message packets.

In the above process of framing the OAM message, the step of separating the OAM message fragment code block identifier control character includes that: the OAM message fragment code block identifier control character is removed from the first OAM message fragment code block stream which is obtained after demultiplexing with the service data to form the second OAM message fragment code block stream, and the OAM message is demultiplexed at the PCS layer. Optionally, when the OAM message fragment and the service data are demultiplexed at the RS layer, the OAM message fragment does not include the fragment code block identifier control character.

In the process of framing the OAM message, the step of identifying the OAM message packet and the step of separating the OAM fragment head information and framing the OAM message packet are implemented according to the OAM fragment head information. Optionally, when the OAM message fragment does not include the OAM fragment head information, the OAM message fragment is directly framed, and the OAM message packet is identified according to frame structure parsing (for example, preamble, SFD, FCS field parsing, see the IEEE 802.3 standard).

Correspondingly, Fig. 6 is a composition structure diagram of an OAM message framing module according to an embodiment of the present invention. As shown in Fig. 6, the OAM message framing module may include: an OAM message fragment code block identifier control character separating module 601, an OAM message fragment caching module 602, an OAM message packet identifying module 603 and an OAM message packet framing module 604.

The OAM message fragment code block identifier control character separating module 601 is configured to remove the OAM message fragment code block identifier control character from the first OAM message fragment code block stream which is obtained after demultiplexing with the service data to form the second OAM message fragment code block stream.

The OAM message fragment caching module 602 is configured to cache the second OAM message fragment code block stream.

The OAM message packet identifying module 603 is configured to identify the minimum OAM message fragment unit included in each OAM message packet frame structure according to the OAM fragment head information in the second OAM message fragment code block stream, or identify the OAM message packet according to the frame structure parsing (for example, preamble, SFD, FCS field parsing, see the IEEE 802.3 standard).

The OAM message packet framing module 604 is configured to combine the minimum OAM message fragment units of multiple OAM message packets into the complete message packet frame structure.

According to the multiplexing layer of the OAM message fragment and the service data, the OAM message fragment code block identifier control character separating module 601 may be an optional module, so the OAM message fragment code block identifier control character separating module 601 is represented by a dashed box in Fig. 6.

Secondly, the process of fragmenting/framing the OAM message bit stream is described.

In the embodiments of the present invention, at the sending side, the process of fragmenting the OAM message bit stream includes the following steps.

At step81, PCS layer coding, FEC coding and parallel-serial conversion are performed to the OAM message frame in turn to form the OAM message bit stream.

At step82, taking 8bit (1byte) as the minimum fragment unit, the OAM message bit stream is fragmented into several minimum fragment units.

At step83, a fragment coding field is added to the OAM message bit stream.

At step84, the OAM message fragment code block identifier control character is defined according to the multiplexed service type, the coding format and the multiplexing protocol layer for distinguishing the OAM message fragment code block from the service message code bock, and the OAM message fragment code block identifier control character, the fragment number index field and the fragment unit are combined into the OAM message fragment according to the service code block format.

At step85, the OAM message fragment is added into the cache queue, waiting to be multiplexed with the service message.

In step81 to step85 of the embodiment, the PCS layer coding, the FEC coding and the parallel-serial conversion are performed to the OAM message frame in turn to form the OAM message bit stream, including that the PCS layer coding of 8B10B, 32B34B or 64B66B is performed to the OAM message, and scrambling is performed to the OAM message bit stream, and a synchronization head is added. In the embodiments of the present invention, when the FEC coding is performed, RS(255, 239), RS(528, 514), Low-Density Parity-Check (LDPC) and other coding modes may be used. At the same time, the step of FEC coding is an optional processing step.

Based on the above process, the definition of an OAM message fragment is shown in Table 2.

**Table 2**

| Field width/ bit | Domain | Description |
|---|---|---|
| 15 | Last flag | Identify whether it is the last fragment of the OAM message |
| 32 | flag index | Code of the OMA message fragment, fixed length, after the number reaches the maximum value, Start numbering again from the minimum |
| 32 | Data&pad | Message content, filled with 0 when the message content is less than 4 bytes |

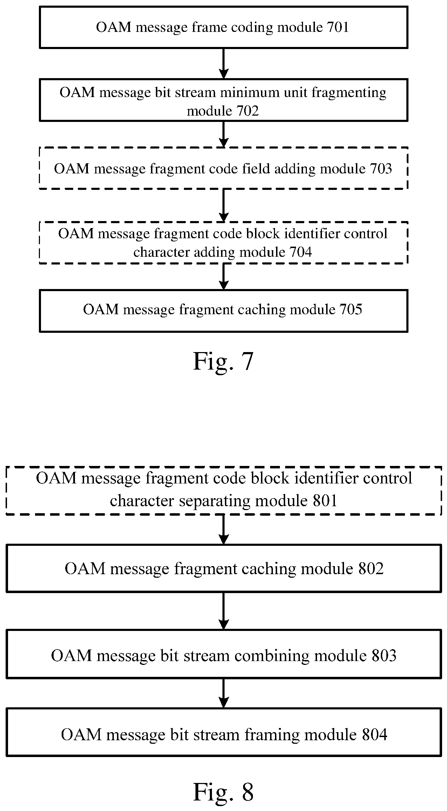

Correspondingly, Fig. 7 is another composition structure diagram of an OAM message fragmenting module according to an embodiment of the present invention. As shown in Fig. 7, the OAM message fragmenting module includes: an OAM message frame coding module 701, an OAM message bit stream minimum unit fragmenting module 702, an OAM message fragment code field adding module 703, an OAM message fragment code block identifier control character adding module 704 and an OAM message fragment caching module 705.

The OAM message frame coding module 701 is configured to perform the PCS layer coding, the FEC coding and the parallel-serial conversion to the OAM message frame in turn to form the OAM message bit stream.

The OAM message bit stream minimum unit fragmenting module 702 is configured to, taking 8bit (1byte) as the minimum fragment unit, fragment the OAM message bit stream into several minimum fragment units.

The OAM message fragment code field adding module 703 is configured to add the fragment coding field to the OAM message bit stream.

The OAM message fragment code block identifier control character adding module 704 is configured to define the OAM message fragment code block identifier control character according to the multiplexed service type, the coding format and the multiplexing protocol layer for distinguishing the OAM message fragment code block from the service flow, and combine the OAM message fragment code block identifier control character, the fragment number index field and the fragment unit into the OAM message fragment according to the service code block format.

The OAM message fragment caching module 705 is configured to cache the OAM message fragment.

The OAM message fragment code field adding module 703 and the OAM message fragment code block identifier control character adding module 704 are optional modules, so the OAM message fragment code field adding module 703 and the OAM message fragment code block identifier control character adding module 704 are represented by a dashed box in Fig. 7.

At the receiving side, the process of framing the OAM message includes the following steps.

At step 91, the OAM message fragment code block identifier control character is separated.

Here, during implementation of S41, the OAM message fragment code block identifier control character is removed from the first OAM message fragment code block stream which is obtained after demultiplexing with the service data to form the second OAM message fragment code block stream, and the second OAM message fragment code block stream is stored in the cache queue.

The second OAM message fragment code block stream is composed of the OAM message fragment unit and the OAM fragment head information.

At step 92, the OAM message bit stream is combined.

Here, the fragment units in the OAM message fragment are combined into the OAM message bit stream by numbers according to the OAM fragment coding field in the second OAM message fragment code block stream.

At step 93, the OAM message bit stream is framed.

Here, FEC decoding and PCS decoding is performed to the obtained OAM message bit stream to obtain the original OAM frame data.

In the above process, the parallel-serial conversion, synchronous processing, the FEC decoding, de-scrambling and the PCS layer coding are performed to the OAM message in turn. At the same time, the step of FEC decoding is an optional processing step.

Correspondingly, Fig. 8 is another composition structure diagram of an OAM message framing module according to an embodiment of the present invention. As shown in Fig. 8, the OAM message framing module may include: an OAM message fragment code block identifier control character separating module 801, an OAM message fragment caching module 802, an OAM message bit stream combining module 803 and an OAM message bit stream framing module 804.

The OAM message fragment code block identifier control character separating module 801 is configured to remove the OAM message fragment code block identifier control character from the first OAM message fragment code block stream which is obtained after demultiplexing with the service data to form the second OAM message fragment code block stream.

The OAM message fragment caching module 802 is configured to cache the second OAM message fragment code block stream.

The OAM message bit stream combining module 803 is configured to combine the OAM message fragment units into the OAM message bit stream by numbers according to the OAM fragment coding field in the second OAM message fragment code block stream.

The OAM message bit stream framing module 804 is configured to perform the FEC decoding and PCS decoding to the obtained OAM message bit stream to obtain the original OAM frame data.

According to the multiplexing layer of the OAM message fragment and the service data, the OAM message fragment code block identifier control character separating module 801 may be an optional module, so the OAM message fragment code block identifier control character separating module 801 is represented by a dashed box in Fig. 8.

There are several options for OAM message multiplexing, such as special block replacement multiplexing at the PCS layer, insertion multiplexing at the RS layer, and codeword marker replacement multiplexing at the FEC layer. The transmission process during the replacement multiplexing of the OAM message and the special code block at the PCS layer, the transmission process during the insertion multiplexing of the OAM message and the RS layer and the transmission process during the replacement multiplexing of the OAM message and the codeword marker at the FEC layer are respectively described below.

First, the special block replacement multiplexing at the PCS layer is described.

In the present embodiment, the transmission process during the replacement multiplexing of the OAM message and the special code block at the PCS layer may be realized by the following steps.

At step111, some control blocks that are by the current service and whose content is the fixed value are selected from the codes defined by the standard; in addition, a corresponding number of code block types may be added based on the existing standard definition, or a corresponding number of code block types the control blocks that are not used in the current service scenario are selected from the standard definition. The block type, coupled with the OAM message fragment code form a new control block.

At step112, at the sending side, the control block in the service flow that matches a selected fixed value (that is, Payload data transferred by the code block each time does not change) is replaced with the new control block carrying the OAM message fragment.

At step113, at the receiving side, the control block carrying the content of the OAM message fragment is replaced with the original control block with the fixed value in the corresponding service flow.

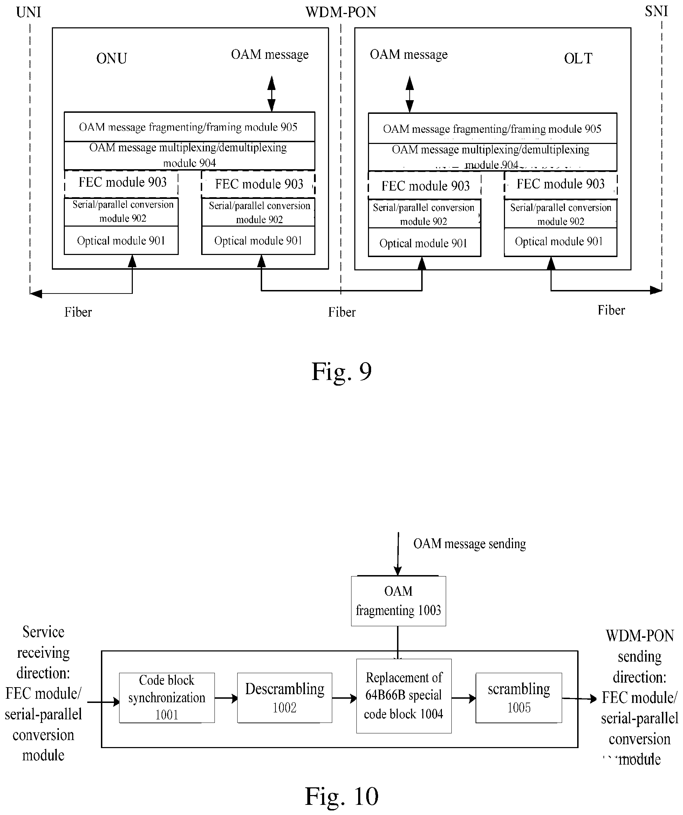

Fig. 9 is a schematic diagram of hierarchical relationship between processing modules for performing OAM message multiplexing and demultiplexing at the PCS layer of an IEEE802.3 standard Ethernet interface according to an embodiment of the present invention. As shown in Fig. 9, an optional module 901 and a serial-parallel conversion module 902 correspond to a PMA layer, an FEC module 903 corresponds to the FEC layer, and the OAM message multiplexing/de-multiplexing module 904 and the OAM message fragmenting/framing module 905 correspond to the PCS layer. The FEC module 903 is optional because if the FEC module is included in a user terminal device, the FEC module may not be set in the sending device and the receiving device, or FEC may not be required if the link quality is good.

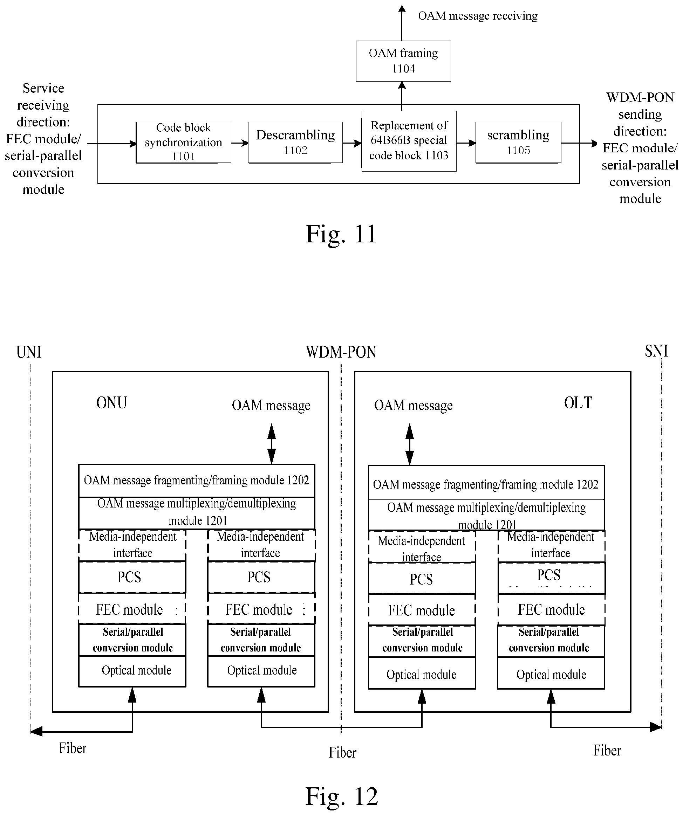

In Fig. 9, the OAM message multiplexing/de-multiplexing module 904 corresponds to the location of the PCS layer in the Ethernet interface PHY. The internal process is shown in Fig. 10 and Fig. 11.

Fig. 10 is a schematic diagram of a process of multiplexing an OAM message at the PCS layer of the sending side according to an embodiment of the present invention. As shown in Fig. 10, the service receiving direction is that the code block synchronization 1001 and de-scrambling 1002 are performed to the data from the FEC module or the serial-parallel conversion module to obtain the 64B66B code block. When the OAM message fragment 1003 needs to be sent, the code block with a specific characteristic is found from the service flow and replaced with the OAM message fragment code block 1004. After the scrambling 1005 is performed to the service flow multiplexing the OAM message data, the service flow is sent to the WDM-PON interface through the FEC module or the serial-parallel conversion module.

Fig. 11 is a schematic diagram of a process of demultiplexing an OAM message at the PCS layer of the receiving side according to an embodiment of the present invention. As shown in Fig. 11, the service receiving direction is that the code block synchronization 1101 and de-scrambling 1102 are performed to the data from the FEC module or the serial-parallel conversion module to obtain the 64B66B code block, from which the OAM message fragment code block is extracted, and replaced and restored to the original code block 1103 with the specific characteristic. The extracted OAM message fragment data is sent to the OAM framing module for processing 1104. After the scrambling 1105 is performed, the service flow that the original code block with the specific characteristic is restored is sent to the service interface through the FEC module or the serial-parallel conversion module.

The coding relationship and process are described for eCPRI and CPRI service scenarios respectively.
(1) In an eCPRI service scenario, the process of transmitting the OAM message is described.
An eCPRI service is borne by Ethernet technology with the underlay corresponding to the 10G/25G Ethernet. The 10G/25G Ethernet uses 4B66B coding. The coding rules and formats are shown in Table 3 and Table 4. In the Ethernet service flow, the code block type not used in the current service scenario may be coupled with the OAM fragment to form the new control block. The code block type not used refers to that fields are 0x66 and 0x55 and the ordered set control character in its control block format is /Fsig/ (4bit 1111 sequence). The code block type (for example, 0xFD and 0xFE) may also be added to form the new control block coupled with the OAM fragment.
Some control blocks that are used in the current service and whose content is the fixed value are selected from the codes defined by the standard. According to the definition in Table 3 and Table 4, a block type field being 0x1e and a block type field being 0x33 meet requirements.

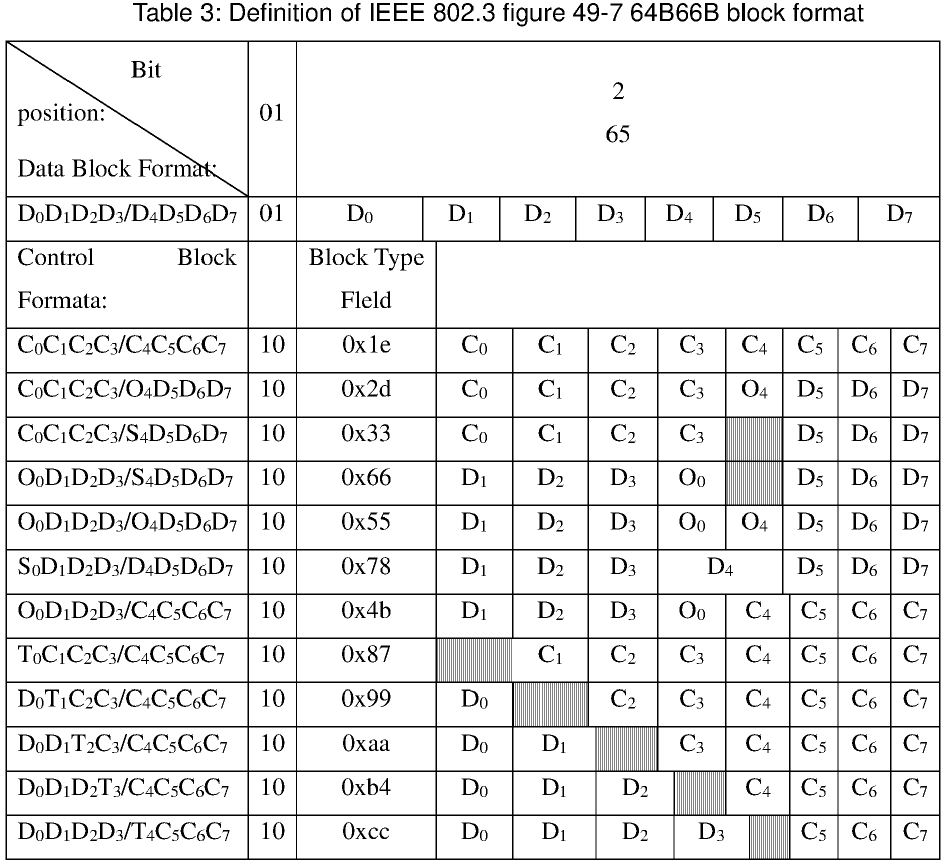

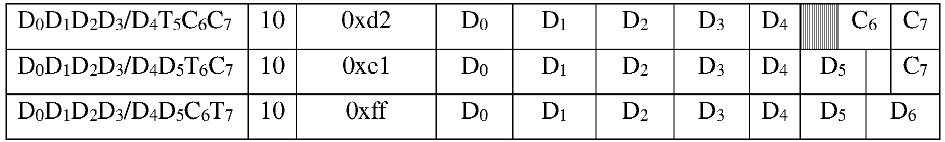

**Table 4: Corresponding relationship between the block type field and input data format and invention**

| Block type field | Input data format | Invention |
|---|---|---|
| 0x1e | C₀C₁C₂C₃/C₄C₅C₆C₇ | Corresponding to idle control characters, and used for frame interval filling |
| 0x2d | C₀C₁C₂C₃/O₄D₅D₆D₇ | Four idle control characters added with an ordered set. The ordered set is used to extend the capability of sending control and state information on a link, for example, remote fault and local fault. The ordered set is composed of a control character followed by a data character of 3 bytes. There are two ordered sets: serial ordered set (corresponding to the control character and denoted as /Q/) and a signaling ordered set (corresponding to the control character and denoted as /Fsig/, and reserved for Fiber Channel interface technology). |
| 0x33 | C₀C₁C₂C₃/S₄D₅D₆D₇ | Four idle control characters followed with an Ethernet packet preamble. The first four byte frames are padded at intervals, corresponding to the idle control characters; the last four bytes |
| | | correspond to the Ethernet packet preamble, and the first byte of the preamble is replaced with the control character /S/. |
| 0x66 | O₀D₁D₂D₃/S₄D₅D₆D₇ | Four byte ordered sets followed by the Ethernet packet preamble. It may be used to transmit the OAM message fragment code (/Fsig/ is selected as the ordered set control character). |
| 0x55 | O₀D₁D₂D₃/O₄D₅D₆D₇ | Two consecutive ordered sets. It may be used to transmit the OAM message fragment code (/Fsig/ is selected as the ordered set control character). |
| 0x78 | S₀D₁D₂D₃/D₄D₅D₆D₇ | Corresponding to the Ethernet packet preamble. The first byte of the preamble is replaced with the control character /S/. |
| 0x4b | O₀D₁D₂D₃/C₄C₅C₆C₇ | Four-byte ordered set followed by four idle control characters |
| 0x87 | T₀C₁C₂C₃/C₄C₅C₆C₇ | 8 bytes at the beginning of the frame interval. /T/ is written in the first byte, and the rest is filled with idle. |
| 0x99 | D₀T₁C₂C₃/C₄C₅C₆C₇ | 1 byte at the end of the Ethernet packet follows 7 bytes at the beginning of the frame interval. /T/ is written in the first byte of the frame interval, and the rest is filled with idle. |
| 0xaa | D₀D₁T₂C₃/C₄C₅C₆C₇ | 2 bytes at the end of the Ethernet packet follow 6 bytes at the |
| | | beginning of the frame interval. /T/ is written in the first byte of the frame interval, and the rest is filled with idle. |
| 0xb4 | D₀D₁D₂T₃/C₄C₅C₆C₇ | 3 bytes at the end of the Ethernet packet follow 5 bytes at the beginning of the frame interval. /T/ is written in the first byte of the frame interval, and the rest is filled with idle. |
| 0xcc | D₀D₁D₂T₃/C₄C₅C₆C₇ | 4 bytes at the end of the Ethernet packet follow 4 bytes at the beginning of the frame interval. /T/ is written in the first byte of the frame interval, and the rest is filled with idle. |
| 0xd2 | D₀D₁D₂D₃/D₄T₅C₆C₇ | 5 bytes at the end of the Ethernet packet follow 3 bytes at the beginning of the frame interval. /T/ is written in the first byte of the frame interval, and the rest is filled with idle. |
| 0xel | D₀D₁D₂D₃/D₄D₅T₆C₇ | 6 bytes at the end of the Ethernet packet follow 2 bytes at the beginning of the frame interval. /T/ is written in the first byte of the frame interval, and the rest is filled with idle. |
| Oxff | D₀D₁D₂D₃/D₄D₅C₆T₇ | 7 bytes at the end of the Ethernet packet follow 1 byte at the beginning of the frame interval. /T/ is written in the first byte of the frame interval, and the rest is filled |
| | | with idle. |

The corresponding block replacement relationship is shown in Table 5 below.

**Table 5: Replacement relationship between a characteristic control block in the service flow and an OAM fragment transmission control block**

| Service flow characteristic control block | | | | | | | | OAM fragment transmission control block | | | | | | | |
|---|---|---|---|---|---|---|---|---|---|---|---|---|---|---|---|
| 1e | 0 | 0 | 0 | 0 | 0 | 0 | 0 | 55 | Bo | B₁ | B2 | ff | B4 | B₅ | B₆ |
| 33 | 0 | 0 | 0 | 0 | 55 | 55 | 55 | 66 | Bo | B₁ | B2 | f7 | B4 | B₅ | B₆ |

The ordered set control character /O/ is used to indicate an ordered set. There are two ordered sets, that is, a sequence ordered set (corresponding to the control character /Q/) and a signal ordered set (corresponding to the control character /Fsig/, and reserved for the Fiber Channel technology standard).
For the Ethernet packet service flow: <inter-frame><preamble><std><data><etd>, at a physical layer, <inter-frame> is started with an end control character /T/, following an idle control character until the start control character /S/ of the next frame.
When seven characters of <preamble> are sent, the first byte is converted to a start control character /S/. The start control character is aligned with Lane0.
Because Ethernet packets have different lengths, the positions of start bytes of frame intervals are different too in the 64B66B block. Because the start control character of the preamble and the Lane0 are required to be aligned, an end byte of the frame interval and the start control character of the preamble may be aligned with either the zeroth byte or the fourth byte in the 64B66B block.
In order to have appropriate code blocks to transmit the OAM message without Ethernet packets and consecutive Ethernet packets for a long time, the code block entirely corresponding to 8 idle control characters and the code block corresponding to 4 idle control characters and whose start control character carries 3 preamble characters are selected as replacement to transmit the OAM message. Corresponding to the Ethernet service, the service flow control blocks with the following two characteristics are replaced for OAM fragment transmission. One of the two service flow control blocks is that the block type field is 0x1e and the latter is 8 7bit idle code words (with fixed value 0), the other is that the block type field is 0x33 and the latter is 4 idle code words (with fixed value 0) and 3 bytes with fixed value 0x55. If the OAM message needs to be sent, the two code blocks may be replaced with the service flow code block of the OAM fragment. The block type fields corresponding to the code block of the OAM fragment are respectively 0x55 and 0x66. In addition, the fourth bytes are respectively Oxff and 0xf, and other six bytes respectively correspond to six bytes of the OAM message fragment. In addition to the definition and corresponding relationship of the code blocks in the above table, the specific implementation is to adjust the definition and corresponding relationship of the code blocks.
The 64B/66B code block of the data flow to be sent is determined at the PCS layer of the sending side. If the code block is a service flow characteristic control block that is not used or has been used and whose content is the fixed value in the PCS layer, at the same time, there is the OAM message to be sent, the service flow characteristic control block is replaced with an OAM fragment transmission control block to be sent. 8 bytes of a control block is replaced each time, and the message fragment of 6 bytes may be sent without interface processing overhead.
The 64B/66B code block of the received data flow is determined at the PCS layer of the receiving side. If the code block corresponds to the OAM fragment transmission control block, the OAM fragment transmission control block is extracted, and the OAM fragment transmission control block in the service flow is replaced with the original service flow characteristic control block.
(2) In a CPRI service scenario, the process of transmitting the OAM message is described.

For the CPRI service, the rate above option8 adopts 64B66B line coding, and a hyper-frame synchronization head corresponds to a special control block.

Table 6 is the 64B66B line coding of a synchronization control character.

**Table 6**

| Sync. | #Z.0.0 | Sync Byte | 50h |
|---|---|---|---|
| Control character | #Z.0.1 | Filling Bytes | 50h |
| | ... | | |
| | #Z.0.6 | | |
| | #Z.0.7 | Terminate Control character | /T/ |
| | #Z.0.8 | Start Control character | /S/ |
| | #Z.0.9 | Filling Bytes | 50h |

The definition here corresponds to the bytes of the XGMII interface, referring to Fig. 49-5 of the IEEE 802.3. The sending device uses the end control character /T/ and the start control character /S/ to provide hyper-frame synchronization information.

The CPRI service uses 3 formats of the 64B/66B line coding, which are respectively a control block format with a terminator, a control block format with a starter, and a data block format.

The PCS codes the start and end control characters in the block type field of the control block format.

The following table 7 is the 64B/66B block format.

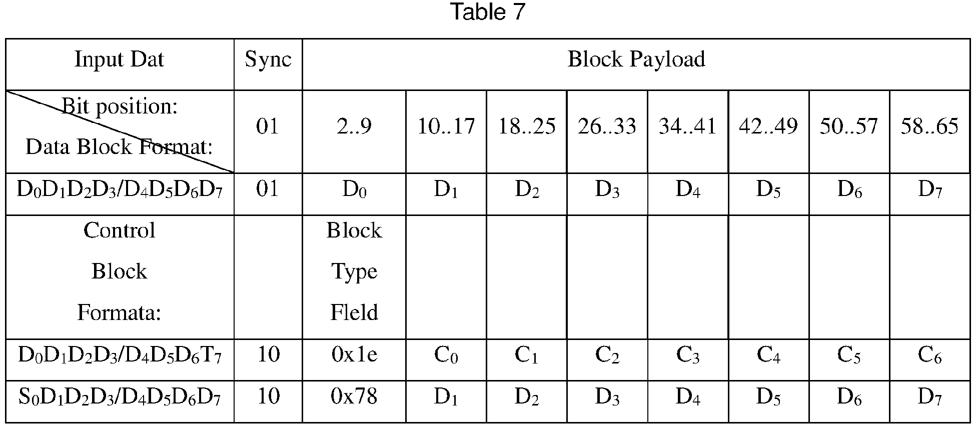

According to the definition of CPRI frame structure, only the processing of the synchronization control character is considered, and a CPRI frame may be expressed in the following form:
<SyncByte><FillingBytes><TerminateControlCharacterxStartControlCha racter><FillingBytes><RestOfHyperframe>

Since both a synchronous byte and a padding byte are 0x50, corresponding to 64B66B coding conversion relationship, two control blocks are coded at the PHY layer:
/T/,0x50,0x50,0x50,0x50,0x50,0x50,0x50
/S/,0x50,0x50,0x50,0x50,0x50,0x50,0x50.

The above two control blocks may be replaced to transmit the OAM message. For the CPRI service with the rate grade of option8-10, the 64B66B code block, where the end control character and the start control character in the synchronization head are, is replaced to transmit the OAM message fragment. In the CPRI service with the rate grade of option8-10, a conversion correspondence between the service flow characteristic control block and the OAM fragment transmission control block is shown in Table 8.

**Table 8: Conversion correspondence table**

| Service flow characteristic control block | | | | | | | | OAM fragment transmission control block | | | | | | | |
|---|---|---|---|---|---|---|---|---|---|---|---|---|---|---|---|
| ff | 50 | 50 | 50 | 50 | 50 | 50 | 50 | 55 | B₀ | B₁ | B2 | ff | B4 | B₅ | B₆ |
| 78 | 50 | 50 | 50 | 50 | 50 | 50 | 50 | 66 | B₀ | B₁ | B2 | f7 | B4 | B₅ | B₆ |

For the CPRI service with the rate grade of option7, 8B10B coding is used. In order to unify FEC and OAM processing, conversion is performed by converting 264 consecutive 8B10B code blocks to corresponding 33 64B66B data code blocks added with 7 64B66B control blocks (corresponding to 2640bits), and then the added control blocks serve as replacement to transmit the OAM message.

For the CPRI service with the rate grade of option7, the 8B10B line coding is used. The 8B10B coding itself has the ability to check and correct errors, but only the single bit error. After 8B10B is converted to 64B66B, enabling the FEC can support correction of consecutive multi-bit errors, and uninterrupted service level can be achieved with a rapid switching mechanism. In order to avoid the complexity of clock processing caused by rate changes, instead of using correspondence conversion between option7 and option7a, eight 8B10B codes are converted to a 64B66B data code block, 264 consecutive 8B10B code blocks are converted to 33 64B66B data code blocks added with 7 64B66B control blocks (corresponding to 2640 bits). The control block values are: ff, 50, 50, 50, 50, 50, 50, 50.

Based on the converted 64B66B coded data, the OAM message fragment is realized by replacing the special control block. In the CPRI service with the rate grade of option7, the conversion correspondence between the service flow characteristic control block and the OAM fragment transmission control block is shown in Table 9.

**Table 9: Conversion correspondence table**

| Service flow characteristic control block | | | | | | | | OAM fragment transmission control block | | | | | | | |
|---|---|---|---|---|---|---|---|---|---|---|---|---|---|---|---|
| ff | 50 | 50 | 50 | 50 | 50 | 50 | 50 | 55 | B₀ | B₁ | B₂ | ff | B4 | B₅ | B₆ |

Second, insertion multiplexing at the RS layer is described.

The OAM message fragment data is inserted in a frame interval at the RS layer.

The ONU and the OLT in the WDM-PON provide a 25G Ethernet interface to access the eCPRI service. There is a 25G WDM-PON link between the ONU and the OLT, and the OAM message is multiplexed on the service channel between the ONU and the OLT to provide a remote management channel for the ONU. An OAM module on the ONU and the OLT provides an OAM message sending and receiving interface upwards, and uses fragment sending and receiving downwards. The OAM message is transmitted by inserting the OAM message fragment code in an Ethernet packet slot without affecting the eCPRI service forwarding.

The eCPRI service uses the Ethernet packet. The ONU and the OLT provide an external Ethernet interface. The preamble of the Ethernet packet and a Start of Frame Delimiter (SFD) have a fixed code of 8 bytes. The minimum Inter-Packet Gap (IPG) is 12 bytes, and these byte spaces may be used to insert the OAM message to be sent.

With reference to the format definition of the IEEE 802.3 figure 49-7 64B66B block, the 8 bytes correspond to a 64bit data block of the XGMII interface data O₀D₁D₂D₃/O₄D₅D₆D₇, a 66bit code block of 0x55D₁D₂D₃/0xffD₅D₆D₇ starting with 10 synchronous bits is generated and sent at the PCS layer. The conversion relationship between the input data and the data generated at the PCS layer is shown in Table 10.

**Table 10**

| Input data | Sync | Block paylod | | | | | | | |
|---|---|---|---|---|---|---|---|---|---|
| O₀D₁D₂D₃/O₄ D₅D₆D₇ | 10 | 0x55 | D₁ | D₂ | D₃ | Oxff | D₅ | D₆ | D₇ |

It can be seen from Table 10 that the code block type value selects the /O/ command in the 802.3 standard, corresponding to the control code /Fsig/. D₁D₂D₃D₅D₆D₇ correspond to 6 bytes of the OAM message fragment in sequence.

The control code type value may also be defined as other values that do not conflict. The interface between the OAM module and the PCS module may refer to the 25GMII interface in the IEEE802.3 standard. The 25GMII interface may eliminate the coding conversion from the 6 bytes of the OAM fragment to the 64B66B block in the module.

Insertion of the OAM message at the RS layer is applied to the 10G Ethernet in addition to the 25G Ethernet. For the CPRI service, the message may be first converted to the Ethernet packet, and then the OAM message is inserted in this way.

Fig. 12 is a schematic diagram of processing hierarchy of performing OAM message multiplexing and demultiplexing at a RS layer of an IEEE802.3 standard Ethernet interface. As shown in Fig. 12, the OAM message multiplexing and demultiplexing module 1201 corresponds to the location of the RS layer in the Ethernet interface PHY.

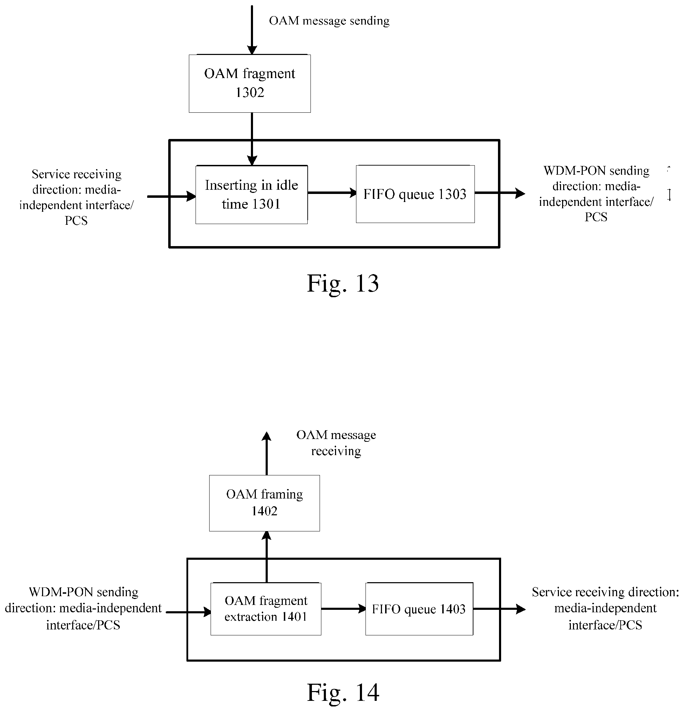

Fig. 13 is a schematic diagram of a process of multiplexing an OAM message at an RS layer of a sending side according to an embodiment of the present invention. As shown in Fig. 13, first the service receiving direction is that: a data flow is received from a media-independent interface or the PCS, and the idle time between the adjacent packets in the data flow is determined. If there is the OAM message needing to be sent, the OAM fragment 1302 data is inserted in a frame interval 1301. The data flow with the OAM message data inserted is sent to an FIFO queue 1303 and sent to the WDM-PON interface through the media-independent interface or the PCS.

Fig. 14 is a schematic diagram of a process of demultiplexing an OAM message at an RS layer of a receiving side according to an embodiment of the present invention. As shown in Fig. 14, the WDM-PON receiving direction is that: the data flow received from the media-independent interface or the PCS is identified, if the data flow includes the OAM message fragment, the OAM message fragment is extracted 1401, and then the extracted OAM fragment data is sent to the OAM framing module 1402. The Ethernet packet is sent to the FIFO queue 1403 and sent to the service interface through the media-independent interface or the PCS.

Third, the codeword marker replacement multiplexing at the FEC layer is described.

The process of codeword marker replacement multiplexing of the OAM message and the service data at the FEC layer may be realized by the following steps.

At step 121, the location of the codeword marker code block is determined.

At step 122, the sending side selects a certain number of bits at certain locations to be replaced with the OAM message fragment.

At step 123, the receiving side extracts the OAM fragment and performs FEC recovery after codeword marker restoration.

An RS-FEC (528, 514) algorithm is used for the 25G Ethernet. There is the codeword marker in the code. At the FEC layer, the code blocks in the received data flow are locked synchronously through the codeword marker to find the codeword marker code block of 257 bits. If there is the OAM message needing to be sent, the bits from the 64th bit to the 255th bit in the codeword marker code block are replaced with the OAM message data.

The code of the codeword marker is defined referring to IEEE 802.3. The 64B block with number 0 is reserved and configured as an identification characteristic for the receiving side. Table 11 is a replacement correspondence between the codeword marker code block and the OAM message when multiplexing is performed at the FEC layer.

**Table 11**

| 64B block number | Service flow codeword marker code | OAM fragment transmission conversion code |
|---|---|---|
| 0 | 0xC1, 0x68, 0x21, B1P₃, 0x3E, 0x97, 0xDE, B1P₇ | 0xC1, 0x68, 0x21, B1P₃, 0x3E, 0x97, 0xDE, B1P₇ |
| 1 | 0xF0, 0xC4, 0xE6, B1P₃, 0x0f, 0x3B, 0x19, B1P₇ | 0x55, OAMo, OAM₁, OAM₂, 0Xff, OAM₄, OAM₅, OAM₆ |
| 2 | 0xC5, 0x65, 0x9B, B1P₃, 0x3A, 0x9A, 0x64, B1P₇ | 0x55, OAM₀, OAM₁, OAM₂, 0Xff, OAM₄, OAM₅, OAM₆ |
| 3 | 0xA2, 0x79, 0x3D, B1 P₃, 0x5D, 0x86, 0XC2, B1P₇ | 0x55, OAMo, OAM₁, OAM₂, 0Xff, OAM₄, OAM₅, OAM₆ |

Here, the codeword marker may be taken to this node when an upstream network node enables the FEC to perform code conversion, or generated when this node performs PCS coding and FEC coding. During implementation, in addition to replacing the OAM message to be transmitted with the bits from the 64th bit to the 255th bit, other number of bits at other locations may be selected to transmit the OAM message fragment. The receiving side performs FEC recovery after completing OAM fragment extraction and codeword marker recovery.

When there is no codeword marker code in the 10G Ethernet and the CPRI service data flow, to adopt this scheme, it is needed to switch to the 25G Ethernet interface for transmission or borrow the RS-FEC mechanism of the 25G Ethernet.

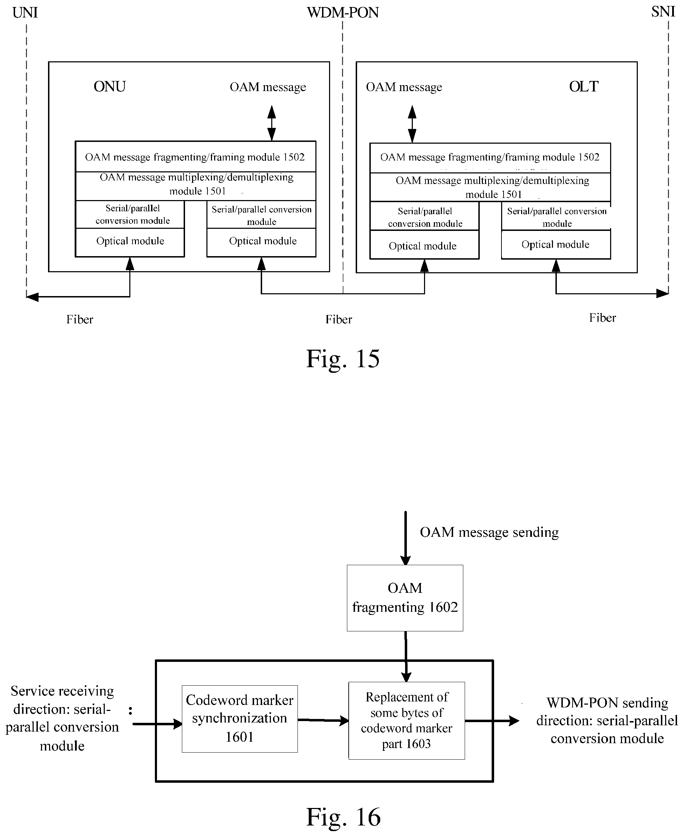

Fig. 15 is a schematic diagram of processing hierarchy of performing OAM message multiplexing and demultiplexing at an FEC layer of an IEEE802.3 standard Ethernet interface. It can be seen from Fig. 15 that an OAM message multiplexing and demultiplexing module 1501 corresponds to the location of the FEC layer in the Ethernet interface PHY.

Fig. 16 is a schematic diagram of a process of multiplexing an OAM message at the FEC layer of the sending side according to an embodiment of the present invention. As shown in Fig. 16, the service receiving direction is that the data is received from the serial-parallel conversion module, and after the codeword synchronization 1601, the codeword marker is found. When the OAM message fragment 1602 need to be sent, some bytes of the codeword marker are replaced with the OAM message fragment code block 1603. The service flow multiplexing the OAM message data is sent to the WDM-PON interface through the serial-parallel conversion module.

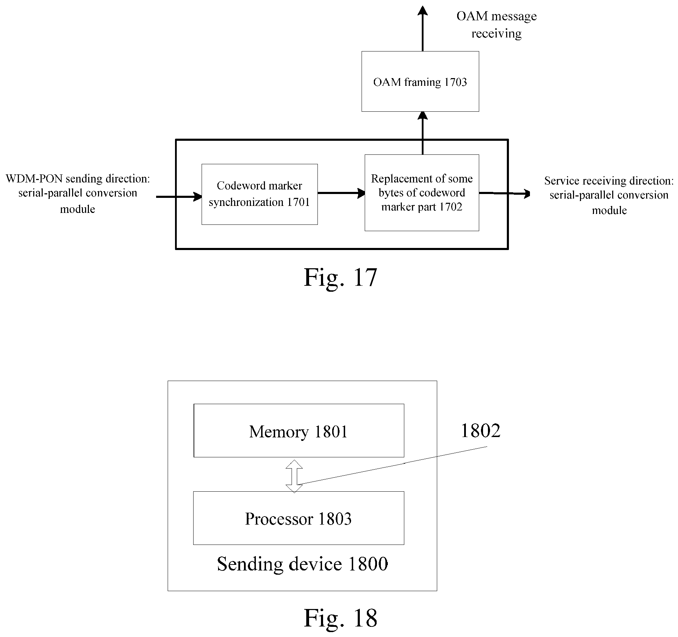

Fig. 17 is a schematic diagram of a process of demultiplexing an OAM message at the FEC layer of the receiving side according to an embodiment of the present invention. As shown in Fig. 17, the service receiving direction is that the codeword marker synchronization 1701 is performed to the data from the serial-parallel conversion module, if some of the bytes in the codeword marker are the OAM message fragment code blocks, then the OAM data is extracted, and replaced and restored to the original codeword marker byte 1702. The extracted OAM message fragment data is sent to the OAM framing module for processing 1703. The service flow that the original codeword marker is restored is sent to the service interface through the serial-parallel conversion module.

When the method for transmitting an OAM message provided by the embodiments of the present invention is used to transmit the OAM message, whether it is applied to the PCS layer, the RS layer or the FEC layer, it does not depend on the transparent AMCC channel of the optical module for processing, but fragmenting the OAM message, inserting the OAM message fragment in the message interval in the service data or replacing the special codeword in the service data with the OAM message fragment to transmit the OAM message. In this way, not only the transmission capability of the service flow will not be affected, but also the delay and jitter will not be caused during service forwarding, thereby improving system performance.

The present embodiment provides a sending device. Fig. is a composition structure diagram of a sending device according to an embodiment of the present invention. As shown in Fig. 18, the sending device 1800 at least includes: a memory 1801, a communication bus 1802 and a processor 1803.

The memory 1801 is configured to store a computer program.

The communication bus 1802 is configured to realize connection communication between the processor and the memory.

The processor 1803 is configured to execute the computer program stored in the memory 1801, so as to implement following steps: the first code block information of the code block occupied in service data by the OAM message fragment to be sent is determined; the OAM message fragment is added into the service data according to the first code block information; and the service data carrying the OAM message fragment is sent to the receiving device.

That is, the processor 1803 is configured to execute the computer program stored in the memory 1801, so as to implement the steps of the method at the sending device side provided by the embodiments of the invention.

It is to be noted that the description of the sending device embodiment is similar to the description of the method embodiment, and the beneficial effects of the device embodiment are the same as that of the method, so they will not be repeated here. Technical details undisclosed in the sending device embodiment of the present invention may be understood with reference to the description of the method embodiment of the present invention.

The embodiments of the present invention also provide a receiving device, which at least includes a memory, a communication bus and a processor.

The memory is configured to store a computer program.

The communication bus is configured to realize connection communication between the processor and the memory.

The processor is configured to execute the computer program stored in the memory to implement the following steps:
the service data sent by the sending device is received; if the service data includes the OAM message fragment of the OAM message, the OAM message fragment is obtained; according to the OAM message fragment, framing is performed to the first fragment unit included in the OAM message fragment to obtain the OAM message.

That is, the processor is configured to execute the computer program stored in the memory, so as to implement the steps of the method at the receiving device side provided by the embodiments of the invention.

It is to be noted that the description of the receiving device embodiment is similar to the description of the method embodiment, and the beneficial effects of the device embodiment are the same as that of the method, so they will not be repeated here. Technical details undisclosed in the receiving device embodiment of the present invention may be understood with reference to the description of the method embodiment of the present invention.

Those skilled in the art should understand that the embodiments of the present invention may be provided as a method, a system or a computer program product. So, the present invention may adopt the forms of a hardware embodiment, a software embodiment, or an embodiment combining software and hardware. Moreover, the present invention may adopt the form of a computer program product implemented on one or more computer available storage media (including, but not limited to, a disk memory and an optical memory and the like) containing computer available program codes. Correspondingly, the embodiments of the present invention provide a readable storage medium, which stores a computer-executable instruction. The computer-executable instruction is configured to perform the method for transmitting an OAM message provided by other embodiments of the present invention.

The present invention is described with reference to flowcharts and/or block diagrams of the method, the device (system) and the computer program product according to the embodiments of the present invention. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the specified functions in one or more flows of the flowchart and/or one or more blocks of the block diagram.

The above is only the preferred embodiments of the present invention and not intended to limit the protection scope of the present invention.

## Claims

1. A method for transmitting an Operation Administration and Maintenance (OAM) message, comprising:
determining first code block information of a code block occupied in service data by an OAM message fragment to be sent;
adding the OAM message fragment into the service data according to the first code block information; and
sending the service data carrying the OAM message fragment to a receiving device.

2. The method as claimed in claim 1, further comprising:
obtaining the OAM message to be sent;
fragmenting the OAM message to be sent to obtain a first fragment unit;
generating the OAM message fragment with a preset coding format according to the first fragment unit; wherein, the OAM message fragment at least comprises a first fragment unit, and the preset coding format is the same as that of the service data carrying the OAM message fragment.

3. The method as claimed in claim 2, wherein generating the OAM message fragment with the preset coding format according to the first fragment unit comprises:
generating fragment head information according to a type of the OAM message and an index identity of the first fragment unit; and
coding the fragment head information and the first preset number of first fragment units according to the preset coding format to obtain the OAM message fragment.

4. The method as claimed in claim 2, wherein generating the OAM message fragment with the preset coding format according to the first fragment unit further comprises:
determining an OAM message identifier control character according to a type of the service data, the coding format of the service data and a multiplexing protocol layer; and
coding the OAM message identifier control character and the first preset number of first fragment units according to the preset coding format to obtain the OAM message fragment.

5. The method as claimed in claim 4, wherein determining the OAM message identifier control character according to the type of the service data, the coding format of the service data and the multiplexing protocol layer comprises:
obtaining a first code block type of a control block that has been used in the service data and whose content is a fixed value according to the type of the service data and the coding format of the service data;
obtaining a second code block type of a control block that is not used in the service data;
adding a third code block type based on the existing standard definition; and
determining at least one of the following types as the OAM message identifier control character:
the first code block type;
the second code block type; and
the third code block type.

6. The method as claimed in claim 4, wherein generating the OAM message fragment with the preset coding format according to the first fragment unit further comprises:
coding the fragment head information, the OAM message identifier control character and the second preset number of first fragment units according to the preset coding format to obtain the OAM message fragment.

7. The method as claimed in claim 1, wherein determining the first code block information of the code block occupied in the service data by the OAM message fragment comprises:
when a multiplexing layer of the OAM message and the service data is a Physical Coding Sublayer (PCS), obtaining second code block information of the control block that has been used in the service data and whose content is a fixed value; and
determining the first code block information of the code block occupied in the service data by the OAM message fragment according to the second code block information and the bandwidth required by the OAM message.

8. The method as claimed in claim 4 or 5, wherein fields of the OAM message identifier control character comprise one or more of 0x1e, 0x33, 0x55, Oxff, 0x66 and 0xf7.

9. The method as claimed in any one of claims 1 to 6, wherein determining the first code block information of the code block occupied in the service data by the OAM message fragment comprises:
when the multiplexing layer of the OAM message and the service data is a Reconciliation Sublayer (RS), obtaining an idle byte space between adjacent packets in the service data; and
determining the first code block information of the code block occupied in the service data by the OAM message fragment according to the idle byte space.

10. The method as claimed in claim 1, wherein determining the first code block information of the code block occupied in the service data by the OAM message fragment comprises:
when the multiplexing layer of the OAM message and the service data is a Forward Error Correction (FEC) layer, determining third code block information of a codeword marker code block in the service data; and
determining the first code block information of the code block occupied in the service data by the OAM message fragment according to the third code block information of the codeword marker code block and the bandwidth required by the OSM message.

11. The method as claimed in claim 7 or 10, wherein adding the OAM message fragment into the service data according to the first code block information comprises:
replacing the service data corresponding to the first code block information with the OAM message fragment.

12. The method as claimed in claim 9, wherein adding the OAM message fragment into the service data according to the first code block information comprises:
adding the OAM message fragment into the service data as the data corresponding to the first code block information.

13. The method as claimed in claim 2, wherein before fragmenting the OAM message to be sent according to a preset length to obtain the first fragment unit, the method further comprises:
performing PCS coding to the OAM message to be sent to obtain a first coding result;
performing FEC coding to the first coding result to obtain a second coding result; and
performing parallel-serial conversion to the second coding result to obtain an OAM message bit stream to be sent.

14. A method for transmitting an Operation Administration and Maintenance (OAM) message, comprising:
receiving service data sent by a sending device;
if the service data comprises an OAM message fragment, obtaining the OAM message fragment; and
according to the OAM message fragment, performing framing to a first fragment unit included in the OAM message fragment to obtain an OAM message.

15. The method as claimed in claim 14, wherein according to the OAM message fragment, performing framing to the first fragment unit included in the OAM message fragment to obtain the OAM message comprises:
decoding the OAM message fragment according to a preset decoding manner to obtain a first decoding result, wherein the first decoding result at least comprises the first fragment unit; and
if the first decoding result comprises an index identity of the first fragment unit, performing framing to the first fragment unit according to the index identity to obtain the OAM message.

16. The method as claimed in claim 15, wherein before if the first decoding result comprises the index identity of the first fragment unit, performing framing to the first fragment unit according to the index identity to obtain the OAM message, the method further comprises:
if the first decoding result comprises an OAM message identifier control character, removing the OAM message identifier control character in the first decoding result to obtain a second processing result;
if the second processing result comprises fragment head information, obtaining the index identity of the first fragment unit included in the fragment head information; and
removing the fragment head information in the second processing result to obtain the first fragment unit included in the first decoding result.

17. The method as claimed in claim 15, wherein according to the OAM message fragment, performing framing to the first fragment unit included in the OAM message fragment to obtain the OAM message comprises:
if the first decoding result does not comprise the index identity of the first fragment unit, performing framing to the first fragment unit according to a preset algorithm to obtain a first framing result; and
verifying the first framing result, and if the first framing result passes the verification, taking the first framing result as the received OAM message.

18. The method as claimed in claim 17, further comprising:
if the first framing result does not pass the verification, discarding the first framing result; and
sending a notification message about framing failure to the sending device.

19. The method as claimed in claim 14, further comprising:
obtaining first code block information occupied by transmitting the OAM message fragment in the service data; and
if a control block corresponding to the first code block information is a control block that has been used in the service data and whose content is a fixed value, replacing data of the control block with the fixed value.

20. The method as claimed in any one of claims 14 to 19, further comprising:
if an OAM message bit stream is obtained by performing framing to the first fragment unit, performing parallel-serial conversion to the OAM message bit stream to obtain a first processing result;
performing FEC decoding to the first processing result to obtain a second decoding result; and
performing PCS decoding to the second decoding result to obtain OAM message frame data.

21. A sending device, at least comprising a memory, a communication bus and a processor, wherein:
the memory is configured to store a computer program;
the communication bus is configured to realize a communication connection between the processor and the memory; and
the processor is configured to execute the computer program stored in the memory, so as to implement the steps of the method for transmitting an OAM message as claimed in any one of claims 1 to 13.

22. A receiving device, at least comprising a memory, a communication bus and a processor, wherein:
the memory is configured to store a computer program;
the communication bus is configured to realize a communication connection between the processor and the memory; and
the processor is configured to execute an OAM message transmission program stored in the memory, so as to implement the method for transmitting a method for transmitting an OAM message as claimed in any one of claims 14 to 20.

23. A readable storage medium, storing a computer-executable instruction, the computer-executable instruction being configured to perform the steps of the method for transmitting an OAM message as claimed in any one of claims 1 to 13 or claims 14 to 20.
